# EUROPEAN PATENT SPECIFICATION

(11) **EP 0 706 850 B1**
(45) Date of publication and mention of the grant of the patent: **06.10.1999**
(21) Application number: 95307249.3
(22) Date of filing: 12.10.1995
(51) Int. Cl.: B23K 35/00

(54) **Brazable cobalt-containing CBN compacts**
Lötbare Kobalt enthaltende kubische Bornitrid-Körper
Compacts de nitrure de bore cubique contenant du cobalt, aptes au brasage

(30) Priority: 13.10.1994 US 322810
(43) Date of publication of application: 17.04.1996
(73) Proprietor: GENERAL ELECTRIC COMPANY, Schenectady, NY 12345 (US)
(72) Inventor: Cerutti, David Bruce, Worthington, Ohio 43085 (US)
(74) Representative: Szary, Anne Catherine, Dr.

(56) References cited:
- EP-A- 0 104 063
- EP-A- 0 184 455
- EP-A- 0 397 515
- CH-A- 649 098
- DE-C- 849 505
- FR-A- 2 210 474
- US-A- 4 567 110

## Description

### BACKGROUND OF THE INVENTION

The present invention relates to the manufacture of brazable polycrystalline cubic boron nitride (CBN) compacts which contain cobalt, and to the joining of such compacts to a substrate by a brazing process.

An abrasive or superabrasive compact may be characterized generally as an integrally-bonded structure formed of a sintered, polycrystalline mass of abrasive particles, such as diamond or CBN. Although such compacts may be self-bonded without the aid of a bonding matrix or second phase, it generally is preferred, as is discussed in U.S. Patent Nos. 4,063,909 and 4,601,423, to employ a suitable bonding matrix which usually is a metal such as cobalt, iron, nickel, platinum, titanium, chromium, tantalum, or an alloy or mixture thereof. The bonding matrix, which is provided at from about 10% to 30% by volume, additionally may contain a catalyst such as aluminum for CBN recrystallization or growth.

For many applications, it is preferred that the compact is supported by its bonding to substrate material to form a laminate or supported compact arrangement. This bonding may be effected during the formation of the compact via the HT/HP processing conditions used therefor, or subsequent to the formation of the compact using joining techniques such as soldering, brazing, or adhesive bonding. Typically, the substrate material is provided as a cemented metal carbide which comprises, for example, tungsten, titanium, or tantalum carbide particles, or a mixture thereof, which are bonded together with a binder of about 6% to about 25% by weight of a metal such as cobalt, nickel, or iron, or a mixture or alloy thereof. As is shown, for example, in U.S. Patent Nos. 3,831,428; 3,852,078; and 3,876,751, compacts and supported compacts have found acceptance in a variety of applications as parts or blanks for cutting and dressing tools, as drill bits, and as wear parts or surfaces.

The basic method for manufacturing the cobalt-containing, polycrystalline CBN compacts of the type described herein involves the placing of an unsintered mass of abrasive, crystalline CBN particles within a protectively shielded metal enclosure which is disposed within the reaction cell of a HT/HP apparatus of a type described further in U.S. Patent Nos. 2,947,611; 2,941,241; 2,941,248; 3,609,818; 3,767,371; 4,289,503; 4,673,414; and 4,954,139. Additionally placed within the enclosure with the abrasive particles is a metal binder or bonding medium which forms the bonding matrix or second phase previously mentioned. The contents of the cell then are subjected to processing conditions selected as sufficient to effect intercrystalline bonding between adjacent grains of the abrasive particles. Such processing conditions generally involve the imposition for about 3 to 120 minutes of a temperature of at least 1300°C and a pressure of at least 20 kbar.

The binder or bonding media may be provided in a pre-consolidated form disposed adjacent the crystal particles. For example, the metal may be configured as an annulus into which is received a cylinder of abrasive crystal particles, or as a disc which is disposed above or below the crystalline mass. Alternatively, the metal may be provided in a powdered form and intermixed with the abrasive crystalline particles, or as a cemented metal carbide or carbide molding powder which may be cold pressed into shape and wherein the cementing agent is provided as the catalyst, solvent, or binder. Typically, as aforementioned, the metal is selected from cobalt, iron, or nickel, or an alloy or mixture thereof, but other metals such as ruthenium, rhodium, palladium, chromium, manganese, tantalum, and alloys and mixtures thereof also may be employed. As is described in U.S. Patent Nos. 3,233,988 and 3,918,219 and as aforementioned, aluminum or an alloy thereof may be employed as a catalyst or solvent for the CBN, although, as is described in U.S. Patent Nos. 4,188,194 and 4,289,503, CBN compacts can be formed by a direct conversion process without any catalyst.

Under the specified HT/HP conditions, the metal binder, in whatever form provided, is caused to penetrate or "sweep" into the abrasive layer by means of either diffusion or capillary action, and is thereby made available to function as an interstitial binder. It is speculated that the HT/HP conditions, which operate in the thermodynamic region wherein CBN is the stable phase, also effect a compaction of the abrasive crystal particles which is charactenzed by intercrystalline CBN-to-CBN bonding wherein parts of each crystalline lattice are shared between adjacent crystal grains. Preferably, the CBN concentration in the compact or in the abrasive table is at least about 50% by volume. Methods for making CBN compacts and supported compacts are more fully described in U.S. Patent Nos. 2,947,617; 3,136,615; 3,233,988; 3,743,489; 3,745,623; 3,767,371; 3,831,428; 3,918,219; 4,188,194; 4,289,503; 4,334,928; 4,673,414; 4,797,326; and 4,954,139.

The polycrystalline compacts described herein, and especially those of the cobalt-containing variety marketed under the name BZN^{®} 6000 by the General Electric Company, have found wide acceptance in a variety of applications. However, it has been reported in U.S. Patent Nos. 4319,707; 4,527,998; 4,772,294; and 4,850,523; and 5,032,147, for example, that thermal degradation at elevated temperatures of about 700°C have limited the usefulness of metal-containing CBN and polycrystalline diamond (PCD) compacts. In general, the service temperatures of metal-containing diamond and CBN compacts have been considered to be identical as due principally to the effects of a differential in the rate of thermal expansion as between the abrasive and metal phases developing point stresses and consequent material cracking. Such a sweeping generality has been widely accepted as evidenced by Sani and Grant, "Brazing of Free-Standing PCBN and PCD Products, "Finer Points," Vol. 5, No. 3, pp. 15-18 (1993), who have reported that the brazing of free-standing PCBN and standard, unbacked, cobalt-based PCD products is possible by minimizing the heat cycle notwithstanding, that the melting point of the braze alloy (830-860°C) is considerably higher than the recommended safe temperature for the compacts (700°C).

To counter the purported thermal instability of metal-containing CBN compacts. it has been suggested, as is described in U.S. Patent Nos.4,850,523; 5,273,557; 4,931,363; and 4,670,025, to substitute "thermally-stable" CBN compacts therefor. Such compacts are characterized as containing less than about 3% of a non-CBN phase having a porous or skeletal morphology resulting from the leaching of the binder or continuous matrix phase from the compact. As is described in U.S. Patent No. 4,334,928, another form of a polycrystalline compact involves a polycrystalline mass of diamond or CBN particles having a second phase of a ceramic material. Polycrystalline diamond and CBN compacts containing a second phase of a cemented carbide or nitride material are exemplary of these so-called "conjoint" or "composite" polycrystalline abrasive compacts. However, it is known that inasmuch as the thermally-stable and conjoint compacts consist essentially only of abrasive particles and, for the conjoint compacts, of a ceramic, the bonding of these compacts to substrates such as cemented metal carbide supports has proven difficult. Such compacts, moreover, are not as abrasion resistant as would be desired in many applications.

Accordingly, it will be appreciated that improvements in the manufacture of the compacts preferred for many cutting, drilling, and machining applications, namely, brazable polycrystalline CBN compacts containing cobalt or the like as matrix phase, would be well-received by industry. Especially desired would be to adhere a strong, self-bonded coating of a refractory metal onto a cobalt-containing CBN compact to form a coated compact which can be brazed to a cemented carbide support or which can be directly brazed to a tool holder or the like without the need for a support.

### BROAD STATEMENT OF THE INVENTION

The present invention is directed to the manufacture of brazable polycrystalline cubic boron nitride (CBN) compacts which contain cobalt, and to the joining of such compacts to a substrate by a brazing process. In effecting the coating of a cobalt-containing CBN compact with a chemically-bonded layer of a refractory metal such as tungsten, the present invention provides for the improved brazing of the compacts directly to a tool holder or the like. The chemically-bonded coating has been observed to withstand severe deformation without spalling. Moreover, the metal-coated compact of the present invention may be brazed to cemented metal carbide support or the like to form a conventional supported compact, but at a lower cost and with an improved dimensional tolerance than when formed using HT/HP techniques. In this regard, multiple compact layers can be formed in a conventional HT/HP press without the need to include cemented metal carbide support layers in the press. Thus, the cell space in the press can be maximized for the production of the abrasive compacts layers, which later may be brazed to support layers to form supported compacts. As this brazing may be effected at lower temperatures as compared to the HT/HP bonding techniques heretofore employed, thermal stresses are minimized and composite compacts may be manufactured having ratios of carbide layer thicknesses to compact layer thicknesses which are outside the range of thickness ratios previously considered recommended. These and other advantages will be readily apparent to those skilled in the art based upon the disclosure contained herein.

It is therefore a feature of the present invention to provide an improved method of making a brazable cobalt-containing cubic boron nitride (CBN) compact. In accordance with the method of the invention, a surface of a cobalt-containing CBN compact is metallized by the deposition of a layer of a refractory metal thereon The metallized compact then is heated to a treatment temperature above about 800°C for at least about 30 minutes to chemically bond the refractory metal to the surface of the compact for forming a metal coating layer thereon.

It is a further feature of the present invention to provide a method of making an improved cobalt-containing cubic boron nitride (CBN) compact brazed to a substrate. In accordance with the method of the invention, a surface of a cobalt-containing CBN compact is metallized by the deposition of a layer of a refractory metal thereon. The metallized compact then is heated to a treatment temperature above about 800°C for at least about 30 minutes to chemically bond the refactory metal to the surface of the compact for forming a metal coating layer thereon. The metal-coated surface of the compact then is brazed to a faying surface of a substrate with a brazing filler metal having a liquidus temperature above about 600°C.

### BRIEF DESCRIPTION OF THE DRAWINGS

For a fuller understanding of the nature and objects of the invention, reference should be had to the following detailed description taken in connection with the accompanying drawings wherein:
Fig. 1 is graphical representation of the linear thermal expansion of a representative cobalt-containing CBN compact over a temperature range of from 0°C to 1200°C;
Fig. 2 is graphical representation of the linear thermal expansion of a representative composite compact (BZN® 8100, General Electric Company) over a temperature range of from 0°C to 1200°C;
Fig. 3 is a graphical representation of the linear thermal expansion of a first representative cobalt-containing PCD compact (Compax® 1500, General Electric Company) over a temperature range of from 0°C to 1200°C; and
Fig. 4 is a graphical representation of the linear thermal expansion of a second representative cobalt-containing PCD compact (Compax^{®} 1600, General Electric Company) over a temperature range of from 0°C to 1200°C.

The drawings will be described further in connection with the following Detailed Description of the Invention.

### DETAILED DESCRIPTION OF THE INVENTION

As aforementioned, it has been reported that the temperature limit of cobalt-containing CBN compacts is similar to that for cobalt-containing PCD compacts, namely, about 700°C. In this regard, it had been thought that the limited service temperatures for both the PCD and CBN compacts were due principally to the effects of the differential in the rate of thermal expansion as between the abrasive and metal phases. As the PCD or CBN abrasive particles exhibit a coefficient of thermal expansion (CTE) relatively lower than that for the residual metal inclusions between the particles, the difference in CTE's was seen as developing point stresses leading to cracking and weakening of the material rendering it useless as an abrasive. Accordingly, production processes requiring a higher service temperature, such as tungsten coating and high temperature brazing, have been limited to the use of thermally-stable PCD or CBN compacts. Unfortunately, these thermally-stable compacts often exhibit certain performance or material properties, such as impact resistance and bondability, which are substantially lower than the cobalt-containing compacts.

Notwithstanding the teachings of the literature to the contrary, however, it has been discovered that the thermal stability or service temperature for cobalt-containing CBN compacts is not, in fact, the same as that for cobalt-containing PCD compacts. Indeed, it has been found experimentally that the cobalt-containing CBN compacts which are the subject of the present invention are thermally stable at temperatures above 800°C and even up to temperatures of about 1000°C. In hindsight, it is postulated that the greater thermal stability of the cobalt-containing compacts may be explained by the fact that cobalt is less active as a solvent or catalyst for CBN as compared to diamond. That is, and as is described in U.S. Patent Nos. 4,772,294 and 5,032,147, in PCD compacts, the cobalt metal, which is used as a solvent or catalyst in the HT/HP forming process in which graphite is converted to diamond, and which is present in the compact as a bonding matrix, becomes active at temperatures of about 700°C at atmospheric pressures. The activation of the cobalt catalyzes the back-conversion of diamond to graphite, and thereby contributes to the structural degradation of the compact and to the loss of its capability as an abrasive table. As cobalt is much less active as a catalyst for CBN than for diamond, it is, apparently, the catalytic effects of the cobalt as to diamond, rather than the differences in the CTE's as between the CBN or diamond particles and the cobalt, which is the limiting factor in the thermal stability of cobalt-containing diamond or CBN compacts.

In view of the discovery of the higher thermal stability of cobalt-containing CBN compacts, post-forming, manufacturing, or assembly processes may be envisioned which exploit this heretofore unknown property. The use of cobalt-containing CBN compacts therefore may now be expanded, particularly with respect to the coating and brazing thereof at temperatures higher than heretofore was known in the art. As used herein, cobalt-containing CBN compacts encompass materials, such as those described in U.S. Patent Nos. 3,233,988; 3,743,489; 3,767,371; 3,918,219. contain from about 70% to about 90% by volume of CBN particles and a second phase or bonding matrix of from about 10% to about 30% by volume of cobalt metal or an alloy or mixture thereof. Such compacts are manufactured by the General Electric Company under the name BZN® 6000.

In accordance with the precepts of the invention, a method is provided for making an improved, brazable cobalt-containing cubic boron nitride compact. The method involves, broadly, the steps of: (a) providing a cobalt-containing CBN compact having at least one surface; (b) metallizing a surface of the cobalt-containing CBN compact by depositing a layer of a refractory metal thereon; and (c) heating the metallized compact to a treatment temperature above about 800°C for at least about 30 minutes, to chemically bond the refractory metal to the surface of the compact for forming a metal coating layer thereon. Importantly, the refractory metal must be capable of forming a chemical bond with the abrasive particles of the compact. By a chemical bond, it is meant that the refractory metal is capable of forming borides or nitrides with the CBN particles. Typical examples of such metals include titanium, manganese, chromium, vanadium, tungsten, molybdenum, and niobium, with tungsten and alloys and mixtures thereof being preferred from a performance standpoint. Thus, the metal is chosen such that it will produce a stable chemical bond with the abrasive particles at temperatures less than the degradation temperature of the compact which, for the cobalt-containing compacts of the present invention, is about 1000°C. If the heat treatment is carried out at too high a temperature, the risks of deterioration of the abrasive particles during heat treatment are increased. To further minimize the risks of deterioration, it is preferred that the heat treatment be effected in an inert, reducing, or non-oxidizing atmosphere such as provided by a neon, argon, hydrogen, or nitrogen gas, or by a vacuum of about 1.33×10⁻² Pa (10⁻⁴ Torr).

In general, the metallizing of the compact may be effect at a substantially lower temperature, preferably between about 300°C and 600°C, than the heat treatment step. As is known in the art for the coating of thermally-stable compacts, and as is detailed in U.S. Patent Nos. 4,931,363; 4,943,488; 4,063,909; 5,037,704; and 5,273,557, such metallizing involves the depositing of a refractory metal, such as nickel, copper, titanium, tungsten, niobium, zirconium, vanadium, molybdenum, chromium, hafnium, or an alloy or mixtures thereof, on a surface of the compact. Any one of a number of known techniques, including electrolytic plating, evaporation, chemical vapor deposition (CVD), sputtering, plasma coating, fused salt bath coating, pack diffusion, or vacuum deposition may be used to effect the deposition of the metal layer. Preferably, the metal layer is deposited to have a thickness of from about 2 microns or less to about 150 microns to minimize the development of stresses in the compact. As is disclosed in U.S. Patent No. 5,273,557 with respect to thermally-stable PCD compacts, the provision of a metal coating layer enhances, for example, the oxidation resistance of the compact during brazing operations, and improves the wetting of the compact by the braze to promote a better adhesion therebetween.

The metal-coated, cobalt-containing CBN compact as herein described may be brazed to a substrate such as a shank or other holder to form a tool, or to a cemented metal carbide layer to form a supported or composite compact. As is typical, the cemented metal carbide layer may comprise, for example, tungsten, titanium, tantalum, or molybdenum carbide particles, or mixtures thereof, and a metal binder such as cobalt, nickel, or iron, ruthenium, rhodium, palladium, platinum, chromium, manganese, tantalum, osmium, iridium, or a mixture or alloy thereof. As it has been observed that the metal-coated, cobalt-containing CBN compacts of the invention are readily brazed either to cemented carbide supports or directly to tool holders and the like, a carbide support therefore need not be included in the reaction cell of the HT/HP apparatus during the forming of the CBN compact. Accordingly, multiple CBN compact layers may be formed to a precise dimensional tolerance without the need to include support layers in the reaction cell of the HT/HP press. As the cemented metal carbide support layers constitute a considerable expense in the forming process and take up valuable cell space, their elimination increases productivity and thereby makes the manufacturing process more economical. In addition, as both sides of an unsupported CBN layer may be precision ground to a desired thickness without taper, CBN compacts having two metal-coated sides may be made in accordance with the present invention for bonding by brazing or the like to a tool such as a twist drill.

The provision of metal-coated CBN compacts according to the invention additionally facilitates the production of supported compacts that heretofore would have violated the previously recommended ratio of carbide layer thickness to abrasive table thickness. That is, a typical CBN compact, as manufactured, results in the abrasive table being in compression as long as the ratio of WC to CBN is greater than about 1. When portions of the WC layer are ground or otherwise removed making the WC/CBN ration less than about 1, the abrasive table may be placed into tension and crack. However, as the brazing of the coated CBN compacts of the present invention may be effected at temperatures lower than the 1300°C necessary to form supported CBN compacts in the conventional HT/HP manner, the stresses in the compact layer are minimized. The use of the essentially stress-free compacts of the present invention therefore facilitates the manufacturing of thinner compacts without a concomitantly increased risk of stress cracking.

As to the brazing of the metal-coated, cobalt-containing CBN compacts of the present invention to a substrate such as a tool holder or a metal carbide support layer, such brazing advantageously may be effected at temperatures higher and for times longer than that heretofore known. Indeed, as noted in U.S. Patent Nos. 4,319,707 and 4,772,294, braze alloys with liquidus temperatures of less than 700°C were thought necessary unless the compact was provided in a thermally-stable form. The use of such low temperature braze alloys has found, unfortunately, only limited applicability in the marketplace as forming bonds having characteristically lower strengths as compared to higher temperature alloys. Accordingly, it is a precept of the present invention to provide for the brazing of the metal-coated, cobalt-containing CBN compacts of the invention with a brazing filler metal having a liquidus temperature at least above about 600°C, but preferably above about 700 or 800°C.

The brazing of the metal-coated compacts of the invention may be effected through techniques which would be considered conventional for thermally-stable compacts, such techniques being described more fully in U.S. Patent Nos. 4,063,909; 4,225,322; 4,319,707; 4,527,998; 4,601,423; 4,670,025; 4,772,294; 4,850,523; 4,941,891; 4,968,326; 4,931,363; 5,032,147; and 5,273,557, and in Sani and Grant, "Brazing of Free-Standing PCBN and PCD Products, "Finer Points," Vol. 5, No. 3, pp. 15-18 (1993). In general, the brazing of the metal-coated compacts to a substrate such as a carbide support or a tool holder involves the placing of a layer of the braze filler metal between the metallized surface of the compact and the faying surface of the substrate; mating the metallized surface of the compact to the faying surface of the substrate; heating the filler metal to a temperature above its liquidus temperature; and cooling the filler metal to a temperature below its liquidus temperature to bond the metallized surface of the compact to the faying surface of the substrate.

As a result of the heretofore unrecognized thermal stability of the metal-coated compacts of the invention, it has been found that the braze alloy may be heated to a temperature above its liquidus for at least about 2 minutes and for even as long as about 2 hours without adversely affecting the structural integrity of the compacts. Any of a number of braze filler metals, such as alloys of silver, copper, titanium, palladium, platinum, zinc, nickel, gold, and manganese, and mixtures thereof, may be employed, although a TiCuSil alloy (Ti-4.5%, Cu-26.7%, Ag-balance) generally is considered preferred. As would be typical in the art for thermally-stable materials, the brazing may be conducted in an inert reducing, or non-oxidizing atmosphere such as provided by a neon, argon, hydrogen, or nitrogen gas, or by a vacuum of about 10⁻⁴ Torr, in order to minimize oxidation or other degradation of the materials. Alternatively, the metal-coated compacts of the invention may be brazed using less aggressive, more standard techniques such as, for example, with a filler alloy having a liquidus of about 600°C.

The Examples to follow, wherein all percentages and proportions are by weight unless otherwise expressly indicated, are illustrative of the practicing of the invention herein involved, but should not be construed in any limiting sense.

### EXAMPLES

### EXAMPLE 1

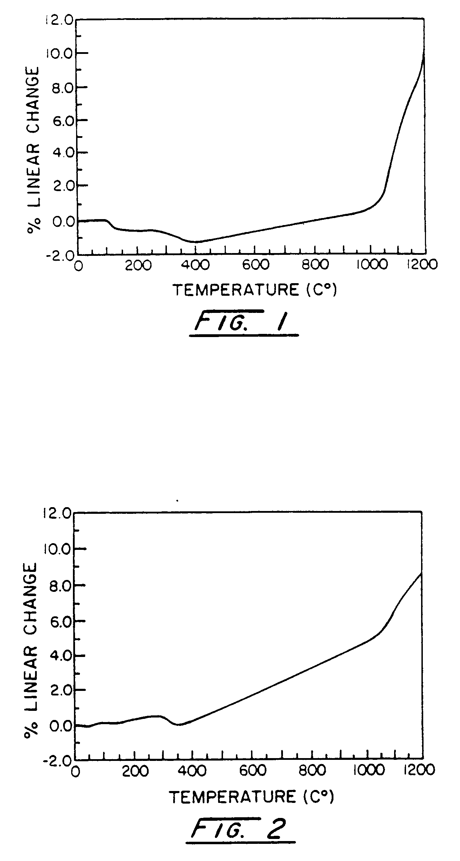

To confirm the discovered thermal stability limits for the cobalt-containing CBN compacts which are the subject of the present invention, a thermal expansion study was conducted wherein standard linear thermal expansion curves were generated for both cobalt-containing CBN and PCD compacts. A standard linear thermal expansion curve additionally was generated for a TiN-containing CBN sample as a reference material. An Orton Dilatometer Model 15000 was used with a heating rate of 3.00 °C/min over a temperature range of 0°C to 1200°C. The sample lengths were approximately 2 cm (0.75 inch). The curves obtained are represented graphically in Figs. 1-4 as plots of percentage linear change (or coefficient of thermal expansion) versus temperature. A sharp change in the slope of these curves indicates the temperature at which the thermal expansion of the material sharply increases, and whereat the material is considered thermally unstable.

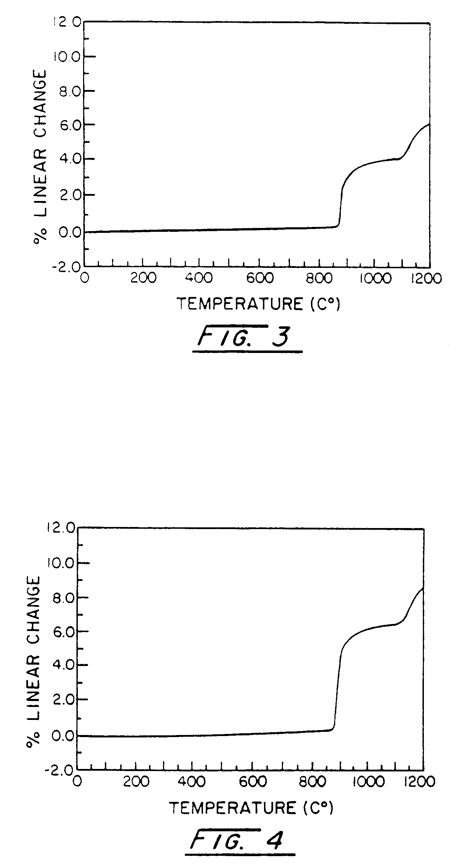

Looking firstly to Fig. 1, shown is the thermal expansion curve for a representative sample (BZN^{®} 6000, General Electric Company) for the cobalt-containing CBN compacts which are the subject of the invention. The curve reveals that the thermal expansion of the sample does not deviate from the lower or thermally-stable temperature curve until at about 1000°C. In this regard, the material is seen has having a thermal response similar to that exhibited by the TiN-containing reference compact (BZN^{®} 8100, General Electric Company) shown in Fig. 2. In contrast, the cobalt-containing PCD samples of Fig. 3 (Compax^{®} 1500) and Fig. 4 (Compax^{®} 1600) show a deviation from the thermally-stable temperature curve at a considerably lower temperature. Such behavior translates, as has been observed experimentally, to a higher thermal stability limit for the cobalt-contain CBN compacts of the invention as compared to cobalt-containing PCD compacts.

### EXAMPLE 2

A second thermal stability study was conducted to determine if temperature limits higher than the 700°C to 750°C range associated with cobalt-containing PCD compacts could be exceeded for the cobalt-containing CBN compacts of the invention. Samples of cobalt-containing CBN compacts (BZN^{®} 6000, General Electric Company) supported on cemented tungsten carbide substrates were subjected to a thermal treatment of up to 1000°C for up to 2 hours. The treated samples then were brazed to a tool holder to make a standard tool. Machining tests with the tool indicated that there was no degradation of performance as compared to tools having compacts which had not been heat treated. In particular, no cracking of the heat treated sample was visually evident.

### EXAMPLE 3

To validate the precepts of the present invention, 1 cm (0.390 inch) squares having a thickness of 1 mm of a cobalt-containing CBN compact (BZN^{®} 6000, General Electric Company) were cut and tungsten-coated by thermal decomposition (CVD) of tungsten hexafluoride at a temperature of about 500°C to 600°C. The coated samples then were heat treated at a temperature of about 850°C to 925°C for up to 2 hours. After heat treating, the samples were brazed using an EASY-FLO 45™ braze filler alloy (Handy & Harman) to a tungsten carbide support to make a subassembly for later performance testing. No spalling or cracking of either the tungsten coating or the CBN compact layer was observed. A similarly treated cobalt-containing PCD compact was observed to be warped and to have a spalled coating, which indicated that the thermal stability limit of the compact had been exceeded.

### EXAMPLE 4

A brazed CBN-tungsten carbide subassembly from Example 3 was prepared for an end milling evaluation by attachment to a conventional Ingersoll LNE443-01 carbide insert with a low temperature braze alloy. A standard, *i.e.,* HT/HP bonded, cobalt-containing CBN supported compact (BZN^{®} 6000), and standard and brazed titanium nitride-containing CBN supported compacts (BZN^{®} 8100) additionally were evaluated for comparison. The inserts, in turn, were held in a negative Ingersoll 600D12R02 end mill having a nominal outside diameter of 3 cm (1.23 inch). A typical class 30 gray cast iron (Neenah Foundry) having a Brinell hardness of 200 was selected as the workpiece material. The material had a pearlitic/graphite structure with a Type-A graphite flake distribution, and was machined prior to testing to remove all surface scale and oxidation.

The inserts, without chamfer or hone, were performance tested in a flycutting mode. The radial depth or width-of-cut was set at 1.27 cm (0.500 inch) to minimize the effects of radial chip thinning, and the axial depth-of-cut (DOC) was set for a total engagement with the workpiece thickness of 2.375 cm (0.935 inch). The cutter velocity was maintained at 457.2 surface meters per minute (1500 surface feet per minute(SFM)) for feedrates of 17.8 µm per tooth (0.0007 inch per tooth (ipt)) and 25.4 µm per tooth (0.001 ipt.) and a 9.42 cm (3.710 inch) length-of-cut (LOC). The slower 0.0007 ipt feedrate was selected to minimize any chipping of the inserts. At the specified feedrates and conditions, heat was generated such that the workpiece was heated and the iron chips formed were observed to exhibit a bright red glow for several minutes following each pass. The test conditions are summarized in Table 1.

**TABLE 1**

| Test Condition Summary | |
|---|---|
| Machine: | LeBlond/Makino 25 H.P. |
| Workpiece: | Class 30 Gray Cast iron (Bhn 200) |
| Milling Cutter: | 3.12cm (1.23 inch) Ingersoll 600D12R02 End Mill (Negative Geometry) |
| Cutting mode: | Single Insert Flycutting |
| Insert Type: | LNE-443-01, Grade 111 |
| Edge Prep.: | None |
| Hone: | None |
| SFM: | 1500 |
| RPM: | 4658 |
| IPT: | 0.0007 and 0.001 |
| IPM: | 3.3 and 4.7 |
| DOC: | 23.8 mm (0.935 inch) |
| Radial Depth: | 12.7mm (0.500 inch) |
| Coolant: | None |

Following each pass, chip measurements, surface finish, and power readings were obtained. Photographs were taken at the conclusion of each test run. Due to the material limitations of the workpiece the 0.0007 ipt feedrate evaluations were stopped at a machined volume of 6.94 for the standard BZN® 6000 insert and the standard and brazed BZN® 8100 inserts. The brazed BZN® 6000 insert of the invention was selected to machine the remainder of the workpiece material.

The results, which are summarized in Table 2, showed that although the CBN insert coated and brazed according to the present invention did develop a small chip measuring 0.048 mm (0.0019 inch), it nevertheless evidenced no significant flank wear or debrazing. In this regard, it performed comparably to the standard BZN® 6000 insert and to the thermally-stable BZN® 8100 inserts. Accordingly, the results confirm that the metal-coated, cobalt-containing CBN compacts which are the subject of the present invention are brazable to substrates such as cemented tungsten carbide, and are suitable for industrial applications.

**TABLE 2**

| Summary of Results | | | | | | | |
|---|---|---|---|---|---|---|---|
| Insert Type | µm (Inch)/ Tooth | CBN Thickness µm (inch) | Cutting Time (min.) | Mach. Vol. (inch³) | Chips µm (inch) | Power (kW) | Final Ra (µin) µm |
| BZN® 6000 (Brazed) | 25.4 (0.0010) | 526 (0.0207) | 0.8 | 1.74 | 526 (0.0207) | 2.5 | (16) 0.406 |
| BZN® 6000 (Standard) | 25.4 (0.0010) | 648 (0.0255) | 5.8 | 3.47 | None | 2.5 | (16) 0.406 |
| BZN® 8100 (Standard) | 25.4 (0.0010) | 927 (0.0365) | 1.7 | 3.47 | 206 (0.0081) | 2.5 | (16) 0.406 |
| BZN® 8100 (Brazed) | 25.4 (0.0010) | 1346 (0.0530) | 1.7 | 3.47 | 663 (0.0261) | 2.5 | (16) 0.406 |
| BZN® 6000 (Brazed) | 17.8 (0.0007) | 533 (0.0210) | 28.8 | 41.64 | 43 (0.0019) | 2.0 | (22) 0.559 |
| BZN® 6000 (Standard) | 17.8 (0.0007) | 648 (0.0255) | 5.8 | 6.94 | None | 2.0 | (16) 0.406 |
| BZN® 8100 (Standard) | 17.8 (0.0007) | 932 (0.0367) | 5.8 | 6.94 | None | 1.9 | (19) 0.483 |
| BZN® 8100 (Brazed) | 17.8 (0.0007) | 1326 (0.0522) | 5.8 | 6.94 | None | 2.0 | (18) 0.457 |

As it is anticipated that certain changes may be made in the present invention without departing from the scope of the claims, is intended that all matter contained in the foregoing description shall be interpreted as illustrative and not in a limiting sense.

## Claims

1. A method of making a brazable cobalt-containing cubic boron nitride (CBN) compact comprising the steps of.
a) providing a cobalt-containing CBN compact having at least one surface
b) metallizing a surface of said cobalt-containing CBN compact by depositing a layer of refractory metal thereon; and
c) heating the metallized compact to a treatment temperature above 800°C for at least about 30 minutes to chemically bond said refractory metal to the surface of said compact for forming a metal coating layer thereon.

2. The method of claim 1 wherein said CBN compact is provided as comprising between about 10% and 30% by volume of cobalt or an alloy or mixture thereof.

3. The method of claim 1 wherein the metallized compact is heated in step (c) to a treatment temperature of between 800°C and 1000°C.

4. The method of claim 4 wherein the surface of said compact is heated in step (b) at a temperature of between 300°C and 600°C.

5. The method claim 1 wherein the metallized compact is heated in step (c) in an inert, reducing, or non-oxidizing atmosphere.

6. The method of claim 1 wherein said refractory metal is deposited in step (b) in a layer having a thickness of from about less than 2 microns to about 150 microns.

7. A method of brazing a cobalt-containing cubic boron nitride (CBN) compact to a substrate comprising the steps of:
a) providing a cobalt-containing CBN compact having at least one surface;
b) providing a substrate having a faying surface with a surface of said CBN compact;
c) metallizing a surface of said cobalt-containing CBN compact by depositing a layer of a refractory metal thereon;
(d) heating the metallized compact to a treatment temperature above 800°C for at least about 30 minutes to chemically bond said refractory metal to the surface of said substrate for forming a metal coating layer thereon; and
e) brazing the metal-coated surface of said compact to the faying surface of said substrate with a brazing filler metal having a liquidus temperature above about 600°C

8. The method of claim 7 wherein said brazing filler metal is provided as having a liquidus temperature above about 800°C.

9. The method of claim 7 or claim 8 wherein the step (e) of brazing the metal-coated surface of said compact to the faying surface of said substrate with a brazing filler metal having a liquidus temperature above about 600°C comprises the steps of:
i) placing a layer of said filler metal between the metal-coated surface of said compact and the faying surface of said substrate;
ii) mating the metal-coated surface of said compact to the faying surface of said substrate;
iii) heating said filler metal to a temperature above its liquidus temperature; and
iv) cooling said filler metal to a temperature below its liquidus temperature to bond the metal-coated surface of said compact to the faying surface of said substrate.

10. The method of claim 9 wherein said filler metal is heated in step (b) (ii) to a temperature above its liquidus for from about 2 minutes to about 2 hours.

## Patentansprüche

1. Verfahren zum Herstellen eines hartlötbaren, Cobalt enthaltenden, kubischen Bornitrid (CBN)-Preßlings, umfassend die Stufen:
a) Schaffen eines Cobalt enthaltenden CBN-Preßlings mit mindestens einer Oberfläche,
b) Metallisieren einer Oberfläche des Cobalt enthaltenden CBN-Preßlings durch Abscheiden einer Schicht aus hochschmelzendem Metall darauf und
c) Erhitzen des metallisierten Preßlings auf eine Behandlungs-Temperatur oberhalb 800°C für mindestens etwa 30 Minuten, um das hochschmelzende Metall mit der Oberfläche des Preßlings zur Bildung einer Metalluberzugsschicht darauf chemisch zu verbinden.

2. Verfahren nach Anspruch 1, worin der CBN-Preßling zwischen etwa 10 und 30 Vol.-% Cobalt oder eine Legierung oder Mischung davon umfaßt.

3. Verfahren nach Anspruch 1, worin der metallisierte Preßling in Stufe (c) auf eine Behandlungs-Temperatur zwischen 800°C und 1.000°C erhitzt wird.

4. Verfahren nach Anspruch 3, worin die Oberfläche des Preßlings in Stufe (b) auf eine Temperatur zwischen 300°C und 600°C erhitzt wird.

5. Verfahren nach Anspruch 1, worin der metallisierte Preßling in Stufe (c) in einer inerten. reduzierenden oder nicht oxidierenden Atmosphäre erhitzt wird.

6. Verfahren nach Anspruch 1, worin das hochschmelzende Metall in Stufe (b) in einer Schicht mit einer Dicke von etwa weniger als 2 µm bis etwa 150 µm abgeschieden wird.

7. Verfahren zum Hartlöten eines Cobalt enthaltenden, kubischen Bornitrid (CBN)-Preßlings an ein Substrat, umfassend die Stufen:
a) Schaffen eines Cobalt enthaltenden CBN-Preßlings mit mindestens einer Oberfläche,
b) Schaffen eines Substrates, das eine mit einer Oberfläche des CBN-Preßlings fluchtende Oberfläche aufweist,
c) Metallisieren einer Oberfläche des Cobalt enthaltenden CBN-Preßlings durch Abscheiden einer Schicht aus hochschmelzendem Metall darauf,
d) Erhitzen des metallisierten Preßlings auf eine Behandlungs-Temperatur oberhalb 800°C für mindestens 30 Minuten, um das hochschmelzende Metall zur Bildung einer Überzugsschicht darauf chemisch an die Oberfläche das Substrates zu binden und
e) Hartlöten der metallüberzogenen Oberfläche des Preßlings an die fluchtende Oberfläche des Substrates mit einem Hartlöt-Füllmetall mit einer Liquidus-Temperatur oberhalb etwa 600°C.

8. Verfahren nach Anspruch 7, worin das Hartlot-Füllmetall eine Liquidus-Temperatur oberhalb etwa 800°C aufweist.

9. Verfahren nach Anspruch 7 oder 8, worin die Stufe (e) des Hartlötens der metallüberzogenen Oberfläche des Preßlings an die fluchtende Oberfläche des Substrates mit einem Hartlot-Füllmetall mit einer Liquidus-Temperatur oberhalb etwa 600°C die Stufen umfaßt:
i) Anordnen einer Schicht des Füllmetalles zwischen der metallüberzogenen Oberfläche des Preßlings und der fluchtenden Oberfläche des Substrates,
ii) Anpassen der metallüberzogenen Oberfläche des Preßlings an die fluchtende Oberfläche des Substrates,
iii) Erhitzen des Füllmetalles auf eine Temperatur oberhalb seiner Liquidus-Temperatur und
iv) Abkühlen des Füllmetalles auf eine Temperatur unterhalb seiner Liquidus-Temperatur, um die metallüberzogene Oberfläche des Preßlings mit der fluchtenden Oberfläche des Substrates zu verbinden.

10. Verfahren nach Anspruch 9, worin das Füllmetall in Stufe (b)(ii) auf eine Temperatur oberhalb seiner Liquidus-Temperatur für etwa 2 Minuten bis etwa 2 Stunden erhitzt wird.

## Revendications

1. Procédé de fabrication d'un comprimé de nitrure de bore cubique (CBN) contenant du cobalt et apte au brasage, comprenant les étapes consistant à :
a) prévoir un comprimé CBN contenant du cobalt et comportant au moins une surface
b) métalliser une surface dudit comprimé CBN contenant du cobalt en y déposant une couche de métal réfractaire; et
c) chauffer le comprimé métallisé à une température de traitement supérieure à 800 °C pendant au moins 30 minutes pour lier chirniquement ledit métal réfractaire à la surface dudit comprimé pour y former une couche de revêtement métallique.

2. Procédé selon la revendication 1, dans lequel ledit comprimé CBN est conçu pour comprendre entre 10% et 30% environ en volume de cobalt ou d'un alliage ou d'un mélange de ce dernier.

3. Procédé selon la revendication 1, dans lequel le comprimé métallisé est chauffé à l'étape (c) à une température de traitement comprise entre 800 °C et 1000 °C.

4. Procédé selon la revendication 1, dans lequel la surface dudit comprimé est chauffée à l'étape (b) à une température comprise entre 300 °C et 600 °C.

5. Procédé selon la revendication 1, dans lequel le comprimé métallisé est chauffé à l'étape (c) dans une atmosphère inerte, réductrice ou non oxydante.

6. Procédé selon la revendication 1, dans lequel ledit métal réfractaire est déposé à l'étape (b) en une couche ayant une épaisseur d'environ moins de 2 micromètres à environ 150 micromètres.

7. Procédé pour braser un comprimé de nitrure de bore cubique (CBN) contenant du cobalt sur un substrat, comprenant les étapes consistant à :
a) prévoir un comprimé CBN contenant du cobalt et comportant au moins une surface;
b) prévoir un substrat comportant une surface affleurant avec une surface dudit comprimé CBN;
c) métalliser une surface dudit comprimé CBN contenant du cobalt en y déposant une couche de métal réfractaire;
d) chauffer le comprimé métallisé à une température de traitement supérieure à 800 °C pendant au moins 30 minutes pour lier chimiquement ledit métal réfractaire à la surface dudit substrat pour y former une couche de revêtement métallique; et
e) braser la surface revêtue de métal dudit comprimé sur la surface affleurante dudit substrat avec un métal d'apport de brasage ayant une température de liquidus supérieure à 600 °C.

8. Procédé selon la revendication 7, dans lequel ledit métal d'apport de brasage est prévu pour avoir une température de liquidus supérieure à 800 °C.

9. Procédé selon la revendication 7 ou 8, dans lequel l'étape (e) consistant à braser la surface revêtue de métal dudit comprimé sur la surface affleurante dudit substrat avec un métal d'apport de brasage ayant une température de liquidus supérieure à 600 °C comprend les étapes consistant à :
i) placer une couche dudit métal d'apport entre la surface revêtue de métal dudit comprimé et la surface affleurante dudit substrat;
ii) réunir la surface revêtue de métal dudit comprimé et la surface affleurante dudit substrat;
iii) faire chauffer ledit métal d'apport jusqu'à une température supérieure à sa température de liquidus; et
iv) refroidir ledit métal d'apport jusqu'à une température inférieure à sa température de liquidus pour lier la surface revêtue de métal dudit comprimé à la surface affleurante dudit substrat.

10. Procédé selon la revendication 9, dans lequel ledit métal d'apport est chauffé à l'étape (b)(ii) jusqu'à une temperature au-dessus de son liquidus pendant une durée allant d'environ 2 minutes à environ 2 heures.
